# EUROPEAN PATENT SPECIFICATION

(11) **EP 2 098 125 B1**
(45) Date of publication and mention of the grant of the patent: **05.10.2011**
(21) Application number: 08102211.3
(22) Date of filing: 03.03.2008
(51) Int. Cl.: A23L 1/06, A23G 3/54, A23G 3/44

(54) **A gelled food product with high carbohydrate intake efficiency**
Gelförmiges Nahrungsmittel mit hoher Kohlenhydrat-Einlasseffizienz
Produit alimentaire gélifié doté d'une efficacité élevée d'apport de carbohydrates

(43) Date of publication of application: 09.09.2009
(73) Proprietor: Nestec S.A., 1800 Vevey (CH)
(72) Inventor: Bousquet, Aude, 1030 Bussigny (CH); Haile, Tesfa, 1008 Prilly, (CH); Jakob, Dora, 1400 Yverdon-Les-Bains (CH); Janousek, Jiri, 28911 Pecky, (CZ); Remes, David,, 69144 Lednice, (CZ)
(74) Representative: Brearley, Helen Rebecca

(56) References cited:
- WO-A-2005/079819
- US-A- 4 704 293
- US-A- 5 328 711
- US-A- 5 626 896
- US-A1- 2004 237 663
- US-B1- 6 231 900

## Description

### Field of the Invention

This invention relates to a gelled food product, such as a gummy, able to deliver an efficient intake of carbohydrate during or after exercise.

### Background to the Invention

Providing an optimum supply of nutriments and energy to the sportsmen and sportswomen is the object of many commercialized products. Many of these are based on conventional nutritional concepts and are based on conventional ingredients such as fruits, cereals, sugars, honey, fibers and chocolate. Some sport food articles are more elaborated products and have been proven to have a positive physiological effect during or after exercise. Among the key areas are the (re)hydration of the body, the replenishment of minerals that are lost in perspiration during exercise, and the supply of energy. Supplying energy to the sportsmen and women can be done in many ways : Many classes of nutriments can bring a substantial amount of calories in an adequate matrix. Fat, proteins and carbohydrates can all bring energy to the human body. However the speed of bio-availability of the energy to the muscles is of particular importance for the sportsmen and women. Delivering energy in a fast and efficient way to the body muscles remains a key challenge of sport food. The energy has to be made available quickly and the digestion, absorption and transportation of the energetic nutrients should consume itself a minimal amount of energy.

The sportsmen and women encounter particular situations that bring constrains to the form, package, and amount of the food consumed during or just after exercise : For example sport food must be not only conveniently packaged (for consumption on the go during exercise), but the amount per single serve must be adapted to both what the sportsman or woman can carry and consume during exercise and to what their body actually needs and can absorb in a specific period of time. Too large portions are not only inconvenient to carry but also totally unadapted to the need of the body; too small portions will not bring enough nutrients or energy to the body. A specific energy density (kCal per gram of food) is needed.

Studies have also shown that energy and fluid replenishments of the human body is best when provided on a substantially continuous basis. Re-hydration through multiple small liquid intake provides a better balance to the body during exercise. Similarly intake of multiple relatively modest amount of energetic food during exercise can provide an enhanced balance for the human body and can thus increase the overall performance.

Last, but not least, the overall texture and taste of the sport food is critical to the actual balanced intake. No sport man or woman will actually and repeatedly consume during exercise a not-palatable or wrongly textured food. Particular situations in some sport also prevents the consumption or certain product in the wrong form (for example, water based food - susceptible to freezing- for high altitude or low temperature outdoor sports). The organoleptic properties here meet the nutriment composition to deliver a product that will actually deliver the optimal caloric replenishment to the body. In that sense, in sport nutrition, it is critical to use the non-compositional parameters of a sport product, such as taste, size, texture, visual attractiveness, in a synergistic way with the nutrient composition to insure that the sportsman will instinctively utilize the product in a way that will optimize his nutritional intake during exercise.

The synergy between texture and physiological effect is best exemplified in product having a chewy texture: The relatively long mastication of chewing a product (such as gum) induces an increased secretion of saliva in the oral cavity. In turn, the presence of a relatively high quantity of saliva can induce a better and faster absorption of the carbohydrates into the blood stream, making the glucides more readily available to the muscles. As such failing to provide the correct form of product delivery will gravely impair the balanced nutritional intake of the sportsman or woman during exercise.

Sport product are usually transported and stored under stress conditions : high temperature or low temperature, mechanical stress during exercise (i.e. transport in a pocket, backpack or sport-bag) can induce damages to the integrity of the food product. Complex products, especially non homogeneous products (layered products, liquid centers, etc,...) are obviously more susceptible to such stress. Therefore, there is a need for a sport food product that delivers energy to the muscles in the most efficient and rapid way.

There is a need for a product delivering optimum energy while being palatable and having an adequate texture in order to be consumed in sport situations.

There is a need for product that would also be visually attractive such as to secure its repeated use during exercise.

There is a need for a product that can be easily consumed during exercise and that delivers an optimum amount of energy to the muscles in a fast and energy efficient way.

There is a need for a product that efficiently delivers energy to the muscles whilst not being impaired by the usual slow down in the digestive process during high stress exercise.

More specifically, there is a need to deliver a chewy or gelled food product that is easily consumable by the sportsman during exercise and that delivers energy to the muscles in the most efficient way.

Generally, there is a need for a food product that delivers the above benefits or mitigate the above negatives while being stable during an extended period of time, without being affected by aging even under stressed conditions. More specifically there is a need for a food product that does not melt, leak or harden over time.

US 2004/237663 discloses a delivery system comprising an ingestible matrix within which the functional ingredient(s) are substantially uniformly and completely dispersed and in which degradation of the functional ingredient(s) is minimised. The matrix comprises 1) one or more carbohydrate; 2) one or more sugar, sugar syrup and/or sugar alcohol; 3) one or more hydrocolloid; 4) one or more polyhydric alcohol; 5) one or more source of mono- or divalent cations, and 6) water. A delivery system comprising 63 DE corn syrup, High Fructose Corn Syrup and Gelatine is set out in Example 10.

### Summary of the Invention

The present invention relates to a gelled food product. comprising a liquid center and a gelled shell. The gelled food product comprises fructogenic and glucogenic carbohydrates. In a first aspect the Glucogenic / Fructogenic ratio of the gelled shell (defined below) is within a define range, between 1.5 and 2.5, optimally between 1.8 and 2.2. Additionally the gelled shell comprises at least 5% of gelatine (w/w of total dry matter).

The claimed food product is applicable to a performance enhancing and performance sustaining product, preferably consumable as a relatively small, "bite-size", chewy product that can be consumed easily and conveniently during or after exercise, and that has an enhanced stability.

In another aspect, the present invention also comprises other functional ingredients, such as caffeine, menthol, cooling flavours, tingling flavours, vitamins and the like.

### Brief Description of the Drawing

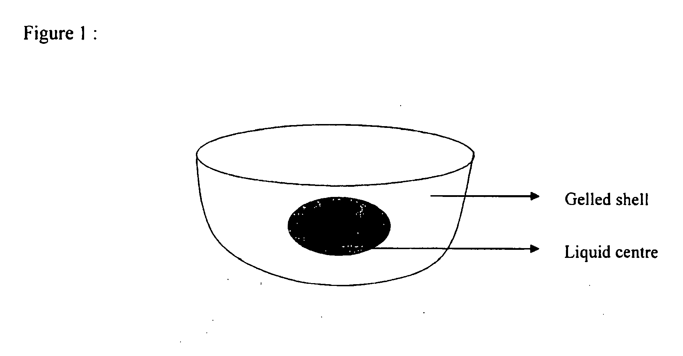

Figure 1 shows a schematic representation of a gelled food product according to the invention..

### Detailed Description of the Invention

Definitions : In this specification, the following terms have the following meanings:

Fructogenic carbohydrate means a carbohydrate whose structure comprises a fructose monomer.

Glucogenic carbohydrate means a carbohydrate whose structure comprises a glucose monomer.

Of note a carbohydrate can be both glucogenic and fructogenic (e.g. Saccharose).

Gelled product is a product that is substantially solid at ambient temperature (i.e. in the approx. range between 10 and 40 °C). Gelled products are characterized by having a relatively soft and chewy texture. Typical gelled products includes gelatine based products as well as products based on certain types of hydrocolloids including but not limited to carrageenan, alginate, starches, agars, gellan gum, pectin ,and cellulose compounds.

Shell means the outer structure of the food product.

All references to percentages are percentages by weight (of dry matter) unless otherwise stated.

The invention relates to a gelled food product comprising a liquid center and a gelled shell. The liquid center will be liquid or quasi-liquid at a usual room temperature, preferably between 10 and 40°c, more preferably between 15 and 30 °C and most preferably at 20°C. Non homogeneous gelled food product having 2 phases (2 zones) are known in confectionary, for example for candy. The liquid center is surrounded by a gelled shell. The liquid center and the gelled shell can have a different composition, for example in terms of flavours. This provides a 2-stage delivery of the flavors and of the sensory effect. Also, such a structure allows for a delivery of different actives that would each benefit from a particular matrix. The shell provides for the integrity of the product by securing a sufficient mechanical resistance and thus avoiding leakage of the liquid center.

The gelled shell comprises fructogenic and glucogenic carbohydrates. The gelled shell can comprise a variety of glucidic compounds. In one embodiment the gelled shell comprises one single carbohydrate. In another embodiment the gelled shell comprises a mixture of 2 or 3 or 4 various carbohydrates. Preferred carbohydrates are those providing both an easily assimilated source of energy and good organoleptic properties. Sucrose, glucose syrup, glucose and fructose are among them.

The carbohydrate composition of the gelled shell is characterized by having a defined Glucogenic / Fructogenic ratio. The calculation method and examples of calculation of the Glucogenic / Fructogenic ratio are provided below.

The inventors have found that a Glucogenic / Fructogenic ratio is optimum when comprised between 1.5 and 2.5. When the ratio is within the cited range, the inventors have found that the availability of energy (from carbohydrates) to the muscles is optimized. The carbohydrate sources of energy are quickly absorbed though the digestive tract and transported to the muscles. It is believed, without being bound by the theory, that such ration provides for an optimum utilization of the glucose (respectively fructose) receptors and transporters. Both absorption pathways (glucose and fructose) being utilized optimally, a beneficial effect is observed in the availability of the sources of energy to the muscles. Also, it is speculated that the energy required to absorb and transport the molecules to the muscles is comparatively lowered.

In one embodiment of the invention the Glucogenic / Fructogenic ratio is between 1.7 and 2.3. In another embodiment , between 1.8 and 2.2 or between 1.9.and 2.1. In one embodiment the invention the ratio is 2.0 or about 2.0. In one embodiment of the invention, the shell exhibits such Glucogenic / Fructogenic ratios. In another embodiment, both the shell and the liquid center exhibit such ratios.

Conventional gelled products are usually made from Glucose syrup and sucrose. They usually exhibit a Glucogenic / Fructogenic ratio of about between 3 and 7, most frequently above 5. In comparison to conventional gelled product the desired ratio of the present invention induces a relatively high % of fructogenic carbohydrates in the composition of the gelled product. Such relatively high % of fructogenic carbohydrates can be delivered by incorporating in the composition a significant portion of sucrose in addition to the glucose syrup. Sucrose, like many other sugars, however tends to crystallize. Crystallisation of sucrose (or of any other compound) is highly dependent of the other compounds present in the composition. Gelled matrixes are more susceptible to crystallization of sugars than fully solid matrixes. Gelled matrixes exhibiting the claimed range of Glucogenic / Fructogenic ratios are even more susceptible to crystallisation.

The inventors have found that crystallization of sucrose, or other sugars has a detrimental effect on the quality of the gelled food product : First, crystallization indices a hardening of the gelled matrix that is detrimental to both the taste, and the texture of the product. It also negatively affect the stability of the product :

The shell becomes hard and breakable over time. This is importantly negative in the context of gelled products having a liquid center, as it can provoke leakage of the liquid center, with many associated drawbacks. Also crystallization can induce a negative change in the texture and visual appearance of the gelled products. In turn this makes the product less attractive and technically less able to be consumed with the appropriate frequency during exercise to deliver its full nutritional benefits.

In the context of gelatine containing gelled food products, the inventors have found that a gelatine % content of at least 5% is able to mitigate the negative effects of the relatively high fructogenic carbohydrate or sucrose content. In embodiments of the invention the gelatine content is at least 6%, at least 7%, at least 8%, at least 9%. In another embodiment, the gelatine content is at least 12%. In one embodiment the shell exhibits any of such gelatine contents. In another embodiment both the shell and the liquid center exhibit any of such gelatine contents (although the liquid center has to remain liquid or substantially liquid).

Without being bound by the theory, the inventors believe that such a high gelatine content modifies the interactions between the molecules of sugars and the gelatine matrix. The mobility of the molecules of sugar is considerably reduced; hence, the speed of crystallization of molecules of sugar is slowed down. The higher viscosity of gelatine matrix with high gelatine content can have an impact. In another model, yet speculative, the inventors believe that the interactions between the water molecules, the gelatine matrix and the sugar molecule is affected.

The context of a gelled product having a liquid center is of particular importance for the invention. Indeed the liquid center generally comprises sugars that can crystallize. The liquid matrix of the liquid center enables fast mobility of the sugar toward the gelled shell. Hence the liquid center tends to enhance the crystallization of the sugars and thus renders the negatives described above more acute. It is believed that the claimed gelatine content of the shell mitigates the negative effects of the liquid center on sugar crystallisation.

The texture and chewing property of the food product is greatly influenced by the gelatine content. The purpose of "gelled food product" can provide an inherent limitation in the upper end of the gelatine content. In some embodiments of the invention the maximum gelatine content of the shell is less than 30%, less than 20% or less than 10%. As such the gelled product of the invention provides for an optimum texture (i.e. chewy, with particular hardness and duration in mouth) that facilitates the most efficient absorption of the carbohydrates. The texture in turn induces a particular pattern of use (mastication time, melting in mouth,..). Texture, mastication time, saliva generation, presence of a liquid center, hardness of the shell, sugar composition and gelatine levels all work synergistically to enhance the efficient intake of the carbohydrates. That efficient intake tends to enhance performance and recovery during/after exercise.

In one embodiment of the invention the % of total carbohydrate in the gelled food product, is between 40% and 95%, preferably between 50% and 65%most preferably between 58% and 86%. The energy density can be between 2 and 5 kCal per gram of product preferably between 2.8 and 3.6 Kcal per gram of product. In one embodiment of the invention such values are valid for both the liquid center and the shell. In another embodiment these values are for the shell only. In one embodiment the product is a "bite-size" product having a total weight of between 2 and 20 g , more preferably between 5 g and 10 g, most preferably between 6 g and 8 g. The size enhances the frequency of use (continuous supply of energy) while delivering the best amount of energy on a given time and diminishing the energy cost for the digestion.

The gelled shell has usually a relatively soft chewy texture. The shell can be of any colour. In a preferred embodiment the shell is translucent, more preferably substantially transparent. The inventors have observed that crystallization of sugars in translucent the gelatine matrix is very visible and leads to the deterioration of the visual property of the shell (i.e. induces a less translucent shell). The inventors have also found that crystallization of sugars, reduces the attractiveness of the food product. This can be linked to the hardening of the gelled shell. By providing a gelled food product that is stable over an extended period of time, and that does not harden, the inventors have found a way to actually enhance the repeated use of product during exercise without compromising the convenience of chewing or taste, and while minimizing the loss of energy (due to mastication of hard products). As such the energy intake during exercise can be actually enhanced in sportsmen and sportswomen.

The gelled food product can comprise other ingredients, more preferably one or more ingredients acting synergistically to promote the stability over time of the product, or promoting the energy delivery efficiency. The other ingredients can be selected in following list : caffeine, menthol, vitamins, flavors, tingling flavors (such as Sichuan pepper extract or cinnamaldehyde), cooling flavours, preservatives, food thickeners such as xanthan, carrageenan, alginate, starches, agars, caroube gum, gellan gum, pectin, cellulose compounds or mixture thereof. Caffeine for example has a functional effect on the metabolic rate and alertness and thus can impact energy delivery to muscles and/or performance in general. Such additional ingredient can be present in the shell of the product, especially when they enhance the stability of the product, and/or in the liquid center.

By some aspects the invention relates to the use of the described gelled food product for providing an optimum carbohydrate intake and utilization during and after exercise. Physical exercise increases the immediate need for energy to be fast transported and absorbed. By proposing the above composition of food product the inventors have isolated a novel way to delivers energy with high efficiency to the muscles in a convenient, stable over time and attractive format, that mitigates the expected negatives of such delivery.

Definition and Calculation of "Glucogenic / Fructogenic ratio". The Glucogenic / Fructogenic ratio is the ratio obtained by dividing total number of glucose molecules over the total number of fructose molecules in a theoretical complete hydrolysis to monosaccharides of all the carbohydrates present in the composition.

For example:
Mix consisting of
   - 80 % [pure glucose]
   - 20% [pure fructose]
Ratio Glucogenic / Fructogenic = 80/20 = 4
   - 100 % high fructose corn syrup (high fructose corn syrup-55 contains 45 % glucose and 55 % fructose)
Ratio Glucogenic / Fructogenic = 45/55 = 0.8
   - 100 % saccharose = 50% fructose and 50% glucose
Ratio Glucogenic / Fructogenic = 50/50 = 1
   - 50 % saccharose
   - 50 % corn syrup [100% glucogenic carbohydrate]
      Ratio Glucogenic / Fructogenic = (50 + 100) / 50 = 3:1

The invention will now be further illustrated by reference to the following example:

### Example 1

A gelled food product of the invention having the below composition is proposed. Figure 1 is an illustration of a gelled food product according to the invention., showing the gelled shell comprising gelatine surrounding the substantially liquid center. Figure 1 can be an illustration of the product of example 1 which composition is detailed below.

Composition of the gelled food product of example 1 :

**(% w/w of dry matter)**

| | |
|---|---|
| **Shell** | (92 %of finished product) |
| Sucrose | 56 % |
| Glucose syrup | 33 % |
| Flavors | Less than 1% |
| Gelatine | 8% |
| Citric acid | Less than 2% |
| Wax (food grade) | Less than 1% |
| **Liquid center** | (8 % of finished product) |
| Sucrose | 41% |
| Glucose syrup | 39% |
| Glycerol | 10% |
| Carrageenan | 3% |
| Acid | 2% |
| Trisodium citrate | 2% |
| Flavour | 1% |
| Colour | 2% |

The gelled food product is a translucent chewy substantially ovoid product of about 6.5 g with a liquid center (in the form of a droplet). It exhibits a Glucogenic / Fructogenic ratio of 2.2. It has 3.25 Kcal / g. It has been shown to be stable for more than 12 months, without alteration of shell hardness, without leakage and without alteration of translucency nor taste.

All ingredient are conventional food grade ingredients. The gelatin in particular is pure pig skin gelatin type A (Rousselot® 275PS), and is sourced from Rousselot SAS (Avenue de l'arche 10, F-92419 Courbevoie, France) and the sugars from Nord Zucker (Cukrovarsk 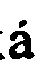 311/9 SK-91411 Tren 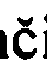 ianska Tepl 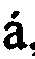 , Slovakia) and Cargill (Cargill Germany GmbH, Montplaisir Str 22, 39249 Barby, Germany)

### Analytical methods

The determination of fructogenic and glucogenic content can be performed by any suitable conventional method. For example, total sugar by acid hydrolysis followed by sugar profile analysis by chromatography. The example 1 described above was in particular analyzed using a total carbohydrate analysis "United States Department of agriculture, energy value of food, Agriculture Handbook n° 74, pp. 2-11 (1973)". The sugar profile was determined in particular following "Mason, B.S., and Slover H.T. " a gas chromatographic method forth e determination of sugars in foods " Journal of agricultural and food chemistry, 19 (3):551-554 (1971)".

The determination of the gelatine content can be performed by any conventional method. For instance, example 1 described above was analyzed using the so-called "Dumas method": "Official method of analysis of AOAC International, 18th ed., Methods 968.06 and 992.15, AOAC International, Gaitherburg, MD, USA (2005). ,

## Claims

1. A gelled food product comprising a liquid center and a gelled shell, said gelled shell comprising fructogenic and glucogenic carbohydrates, **characterized in that** the Glucogenic / Fructogenic ratio of said gelled shell is between 1.5 and 2.5, and said gelled shell comprises at least 5% of gelatine.

2. The gelled food product of claim 1 wherein said gelled shell comprises at least 7% of gelatine.

3. The gelled food product of any of the preceding claims wherein said gelled shell has a Glucogenic / Fructogenic ratio between 1.8 and 2.2.

4. The gelled food product of any of the preceding claims wherein said gelled shell is translucent.

5. The gelled food product of any of the preceding claims wherein said liquid center comprises caffeine, or menthol, or vitamins, or flavors, or tingling flavors (such as Sichuan pepper extract or cinnamaldehyde), or cooling flavours, or preservatives, or food thickeners or mixture thereof.

6. The gelled food product of any of the preceding claims wherein said gelled shell comprises caffeine, or menthol, or vitamins, or flavors, or tingling flavors (such as Sichuan pepper extract or cinnamaldehyde), or cooling flavours, or preservatives, food thickeners or mixture thereof.

7. The gelled food product of any of the preceding claims wherein said liquid center comprises fructogenic and glucogenic carbohydrates and wherein the Glucogenic / Fructogenic ratio of said liquid center is between 1.5 and 2.5.

8. The use of a gelled food product comprising a liquid center and a gelled shell, said gelled shell comprising fructogenic and glucogenic carbohydrates, wherein the Glucogenic / Fructogenic ratio of said gelled shell is between 1.5 and 2.5, and said gelled shell comprising at least 5% of gelatine, for providing an optimum carbohydrate intake during or after exercise, or for enhancing the performance of a sportsman or sportswoman.

## Patentansprüche

1. Geliertes Nahrungsmittelprodukt, das ein flüssiges Zentrum und eine gelierte Hülle aufweist, wobei die gelierte Hülle fruktogene und glukogene Kohlenhydrate umfasst, **dadurch gekennzeichnet, dass** das Verhältnis fruktogene Kohlenhydrate / glukogene Kohlenhydrate der genannten gelierten Hülle zwischen 1,5 und 2,5 liegt und die genannte gelierte Hülle mindestens 5 % Gelatine enthält.

2. Geliertes Nahrungsmittelprodukt nach Patentanspruch 1, wobei die genannte gelierte Hülle mindestens 7 % Gelatine enthält.

3. Geliertes Nahrungsmittelprodukt nach Patentanspruch 1, wobei die genannte gelierte Hülle ein Verhältnis fruktogene Kohlenhydrate / glukogene Kohlennhydrate zwischen 1,8 und 2,2 aufweist.

4. Geliertes Nahrungsmittelprodukt nach einem der vorangehenden Patentansprüche, wobei die genannte gelierte Hülle lichtdurchlässig ist.

5. Geliertes Nahrungsmittelprodukt nach einem der vorangehenden Patentansprüche, wobei das genannte flüssige Zentrum enthält: Koffein oder Menthol oder Vitamine oder Geschmacksstoffe oder Geschmacksstoffe mit einem prickelnden Geschmackserlebnis (wie zum Beispiel Szechuan- Pfeffer - Extrakt oder Cinnamaldehyd), oder Geschmacksstoffe mit einem erfrischenden Geschmackserlebnis oder Konservierungsmittel, Nahrungsmittel - Verdickungsmittel oder Mischungen davon.

6. Geliertes Nahrungsmittelprodukt nach einem der vorangehenden Patentansprüche, wobei die genannte gelierte Hülle enthält: Koffein oder Menthol oder Vitamine oder Geschmacksstoffe oder Geschmacksstoffe mit einem prickelnden Geschmackserlebnis ( wie zum Beispiel Szechuan - Pfeffer - Extrakt oder Cinnamaldehyd ), oder Geschmacksstoffe mit einem erfrischenden Geschmackserlebnis oder Konservierungsmittel, Nahrungsmittel - Verdickungsmittel oder Mischungen davon.

7. Geliertes Nahrungsmittelprodukt nach einem der vorangehenden Patentansprüche, wobei das genannte flüssige Zentrum fruktogene und glukogene Kohlenhydrate aufweist und wobei das Verhältnis fruktogene Kohlenhydrate / glukogene Kohlenhydrate des genannten Zentrums zwischen 1,5 und 2,5 liegt.

8. Verwendung eines gelierten Nahrungsmittelprodukts, das ein flüssiges Zentrum und eine gelierte Hülle aufweist, wobei die gelierte Hülle fruktogene und glukogene Kohlenhydrate aufweist, wobei das Verhältnis fruktogene Kohlenhydrate / glukogene Kohlenhydrate der genannten gelierten Hülle zwischen 1,5 und 2,5 liegt und die genannte gelierte Hülle mindestens 5 % Gelatine enthält, um eine optimale Aufnahme von Kohlehydraten während oder nach Leibesübungen zur Verfügung zu stellen, oder um die Leistung eines Sportmanns oder einer Sportsfrau zu verbessern.

## Revendications

1. Un produit alimentaire gélifié comprenant un centre liquide et une enveloppe gélifiée, ladite enveloppe gélifiée comprenant des glucides fructogénes et glycogènes, **caractérisé en ce que** le rapport glucides glycogènes / glucides fructogènes de ladite enveloppe gélifiée se situe entre 1,5 et 2,5 et **en ce que** ladite enveloppe gélifiée comprend au moins 5% de gélatine.

2. Le produit alimentaire gélifié selon la revendication 1 dans lequel ladite enveloppe gélifiée comprend au moins 7% de gélatine.

3. Le produit alimentaire gélifié selon une des revendications précédentes, dans lequel ladite enveloppe gélifiée présente un rapport glucides glycogènes / glucides fructogènes se situant entre 1,8 et 2,2.

4. Le produit alimentaire gélifié selon une des revendications précédentes, dans lequel l'enveloppe gélifiée est translucide.

5. Le produit alimentaire gélifié selon une des revendications précédentes, dans lequel ledit centre liquide contient de la caféine ou du menthol ou des vitamines ou des arômes qui provoquent un effet de crépitement dans la bouche (comme par exemple, des extraits de poivre de Szechuan ou du Cinnamaldéhyde), ou des arômes qui provoquent un effet rafraîchissant ou des conservateurs ou des agents épaississants alimentaires ou un mélange de ces composants.

6. Le produit alimentaire gélifié selon une des revendications précédentes, dans lequel ladite enveloppe gélifiée contient de la caféine ou du menthol ou des vitamines ou des arômes qui provoquent un effet de crépitement dans la bouche (comme par exemple, des extraits de poivre de Szechuan ou du Cinnamaldéhyde), ou des arômes qui provoquent un effet rafraîchissant ou des conservateurs ou des agents épaississants alimentaires ou un mélange de ces composants.

7. Le produit alimentaire gélifié selon une des revendications précédentes, dans lequel ledit centre liquide contient des glucides fructogènes et des glucides glycogènes et dans lequel le rapport glucides glycogènes glucides fructogènes dudit centre liquide se situe entre 1,5 et 2,5.

8. L'utilisation d'un produit alimentaire gélifié comprenant un centre liquide et une enveloppe gélifiée, ladite enveloppe gélifiée comprenant des glucides fructogènes et des glucides glycogènes où le rapport glucides glycogènes / glucides fructogènes de ladite enveloppe gélifiée se situe entre 1,5 et 2,5, et où ladite enveloppe gélifiée comprend au moins 5% de gélatine pour la mise à disposition d'un apport optimal de glucides pendant ou après un effort ou pour améliorer la performance d'un homme sportif ou d'une femme sportive.
